# EUROPEAN PATENT APPLICATION

(11) **EP 4 564 177 A1**
(43) Date of publication of application: **04.06.2025**
(21) Application number: 24214773.4
(22) Date of filing: 22.11.2024
(51) Int. Cl.: G06F 12/02, G06F 3/06

(54) **MEMORY DEVICE AND MEMORY SYSTEM FOR PERFORMING SWAP OPERATION**

(30) Priority: 28.11.2023 KR 20230168632
(71) Applicant: Samsung Electronics Co., Ltd., Suwon-si, Gyeonggi-do 16677 (KR)
(72) Inventor: Oh, Deok Jae, 16678 Suwon-si, Gyeonggi-do (KR); Shin, Youngsam, 16678 Suwon-si, Gyeonggi-do (KR)
(74) Representative: Grünecker Patent- und Rechtsanwälte PartG mbB

(57) **Abstract**

A memory device includes a memory module including a normal memory area and a swap memory area, and a memory processing unit. The swap memory area is configured to store swapped-out data. The memory processing unit is configured to provide a host with physical address information corresponding to an additional memory area determined based on a size of the swapped out data and the normal memory.

## Description

### TECHNICAL FIELD

Embodiments of the present disclosure relate to a memory device and memory system for performing a swap operation.

### DISCUSSION OF RELATED ART

A swap operation is a memory management technique that addresses a memory shortage by moving a portion of a memory allocated to an application program to an auxiliary storage device (e.g., a solid-state drive (SSD) or a hard disk drive (HDD)) with a relatively large capacity when a main memory area to be allocated to the application program is insufficient in a system.

When the main memory area in a system is insufficient, an operating system may secure a main memory space by moving data in a memory area already allocated to an application program (e.g., pages in a LINUX system using a virtual memory) to a swap area of a non-volatile memory used as an auxiliary storage device, thereby alleviating the memory shortage.

The cost of moving data (e.g., pages) to an auxiliary storage device may be considerable. For example, data is to be transmitted through a relatively slow system bus compared to the main memory, and the stored data may need to be retrieved to the main memory, if necessary. In this case, the performance of an application program may be degraded.

### SUMMARY

The invention is claimed in the independent claims. Preferred embodiments are specified in the dependent claims.

According to an embodiment of the present disclosure, a memory device includes a memory module including a normal memory area and a swap memory area, and a memory processing unit. The swap memory area is configured to store swapped-out data. The memory processing unit is configured to provide a host with physical address information corresponding to an additional memory area determined based on a size of the swapped-out data and the normal memory area.

In an embodiment, the physical address information is a physical address corresponding to a range increased from a default size of the memory module by a difference between an original size of the swapped-out data and a size of the swap memory area.

In an embodiment, an address of the additional memory area corresponds to the swap memory area of the memory module, and a size of the additional memory area is greater than a size of the swap memory area.

In an embodiment, the memory module is configured to store page data allocated to execute an application program in an operating system.

In an embodiment, the memory processing unit is configured to detect cold data from data stored in the memory module based on at least one of an access count or an access time of data recorded in the normal memory area.

In an embodiment, the memory processing unit is further configured to determine data having at least one of an access count that is lower than access counts of other pieces of data recorded in the normal memory area, or an access time preceding access times of other pieces of data, to be the cold data.

In an embodiment, the memory processing unit is further configured to, in response to a memory access request received from the host, update an access count of a page corresponding to the memory access request, and process the memory access request after updating the access count.

In an embodiment, the memory processing unit is further configured to swap out data of a first address determined to correspond to the cold data to a second address, and update mapping information in data access information by mapping the first address from a host side onto the second address.

In an embodiment, the memory processing unit is further configured to, when receiving an access request to the first address from the host, provide the host with access to the second address.

In an embodiment, the memory processing unit is further configured to, when a size of data of the second address is reduced, temporarily store data restored from reduced data in a buffer, and after transmitting the data temporarily stored in the buffer to the host, delete the data from the buffer.

In an embodiment, the memory processing unit is further configured to, in response to an access count with respect to the data of the second address exceeding a threshold, store data restored from reduced data of the second address in a third address in the normal memory area, and provide the host with the restored data stored in the third address.

In an embodiment, the first address is an address belonging to the normal memory area of a memory side, and the second address is an address belonging to the swap memory area of the memory side.

In an embodiment, the memory processing unit is further configured to update mapping information in data access information by mapping a third address of a host side onto the first address of the memory side.

In an embodiment, the memory processing unit is further configured to, when receiving an access request to the third address from the host, provide the host with access to the first address.

In an embodiment, a size of the additional memory area varies depending on a compression rate of the swapped-out data.

In an embodiment, the memory processing unit is further configured to transmit the swapped-out data to an external device including at least one of a memory or a storage, and manage mapping information between a physical address of the swapped-out data and a physical address provided to a host side.

In an embodiment, the memory processing unit is further configured to periodically perform detection and swap-out operations on cold data without a swap-out request by the host.

According to an embodiment of the present disclosure, a method of operating a memory device includes storing swapped-out data in a swap memory area, in which the memory device includes the swap memory area and a normal memory area, and providing a host with physical address information corresponding to an additional memory area determined based on a size of the swapped-out data and the normal memory area.

According to an embodiment of the present disclosure, a memory system includes a memory device configured to provide a host with physical address information of an address range corresponding to a memory size that is greater than a default size, and the host configured to manage a physical address that is accessible by an operating system based on the physical address information.

In an embodiment, the host is further configured to update a physical address, which is provided by the memory device, in a system memory pool of the operating system by performing a hot-plugin operation based on the physical address information.

### BRIEF DESCRIPTION OF THE DRAWINGS

The above and other features of the present disclosure will become more apparent by describing in detail embodiments thereof with reference to the accompanying drawings.
FIGs. 1A and 1B illustrate a memory system according to an embodiment.
FIG. 2 illustrates a memory device according to an embodiment.
FIG. 3 is a flowchart illustrating an operating method of a memory device according to an embodiment.
FIG. 4 illustrates an example of monitoring memory access according to an embodiment.
FIG. 5 illustrates an example of detecting cold data according to an embodiment.
FIG. 6 illustrates an example of a swap-out operation according to an embodiment.
FIG. 7 illustrates an example of changing address mapping due to a swap-out operation according to an embodiment.
FIG. 8 illustrates an example of a swap-in operation according to an embodiment.
FIG. 9 illustrates an example of changing address mapping due to a swap-in operation according to an embodiment.
FIG. 10 illustrates an example of improved memory access in a memory device and/or a memory system according to an embodiment.

### DETAILED DESCRIPTION

Embodiments of the present disclosure will be described more fully hereinafter with reference to the accompanying drawings. Like reference numerals may refer to like elements throughout the accompanying drawings.

The following detailed structural or functional description is provided as an example only, and various alterations and modifications may be made to the examples. Here, the examples are not construed as limited to the disclosure and should be understood to include all changes, equivalents, and replacements within the idea and the technical scope of the disclosure.

It will be understood that the terms "first," "second," "third," etc. are used herein to distinguish one element from another, and the elements are not limited by these terms. Thus, a "first" element in an embodiment may be described as a "second" element in another embodiment.

will be understood that when a component is referred to as being "on", "connected to", "coupled to", or "adjacent to" another component, it can be directly on, connected, coupled, or adjacent to the other component, or intervening components may be present. It will also be understood that when a component is referred to as being "between" two components, it can be the only component between the two components, or one or more intervening components may also be present. Other words used to describe the relationships between components should be interpreted in a like fashion.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, each of the terms "A or B," "at least one of A and B," "at least one of A or B," "A, B or C," "at least one of A, B and C," and "at least one of A, B, or C," may include any one of the items listed together in the corresponding one of the phrases, or all possible combinations thereof.

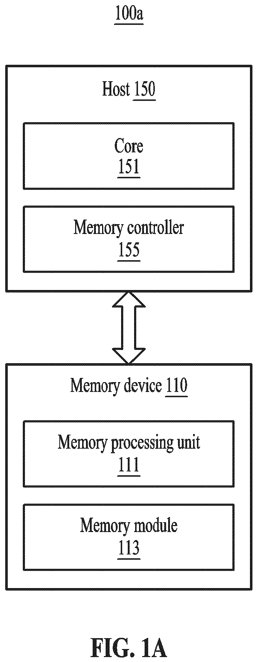

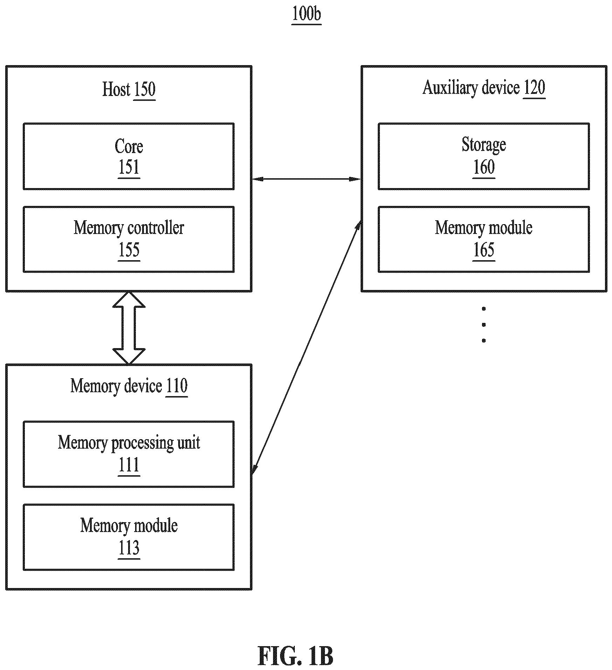

FIGs. 1A and 1B illustrate a memory system according to an embodiment.

Referring to FIGs. 1A and 1B, a memory system 100a or 100b according to an embodiment may provide offloading of an operation (e.g., a swap operation). For example, the memory system 100a or 100b may provide offloading of an operation between a host device and a peripheral device. Offloading may allow a peripheral device (e.g., a peripheral memory device 110) to perform a portion of operations instead of a host 150 (e.g., a host central processing unit (CPU)) in the memory system 100a or 100b. For example, a portion of operations may be offloaded (e.g., distributed) to the peripheral memory device 110 in the memory system 100a or 100b. For example, according to embodiments, a swap operation (e.g., a swap-out operation and a swap-in operation) may be offloaded to the memory device 110.

According to an embodiment, the memory system 100a or 100b may include the host 150 and the memory device 110.

The host 150 may be a main management entity of a computer system (e.g., an electronic device) and may be implemented as, for example, a host processor or a server. The host processor may include, for example, a host CPU. For example, the host processor may include a processor core 151 and a memory controller 155. The memory controller 155 may control the peripheral memory device 110. The memory controller 155 may transmit an instruction to the memory device 110. In addition, the host processor may process data received from the memory device 110 using the processor core 151.

The memory device 110 in an embodiment may process data in a memory area described below by cooperating with the host processor. For example, the memory device 110 may process data based on an instruction received from the host processor. The memory device 110 may control a memory area in response to the instruction of the host processor. The memory device 110 may be separated from the host processor. For example, the memory device 100 and the host processor may be distinct devices physically separated from each other. The peripheral memory device 110 may be, for example, a memory device connected to and disposed adjacent to the host 150. For example, the memory device 110 may include a memory processing unit 111 and a memory module 113. The memory processing unit 111 may also be referred to as a memory processor or a memory processing circuit, and the memory module 113 may also be referred to as a memory or a memory circuit.

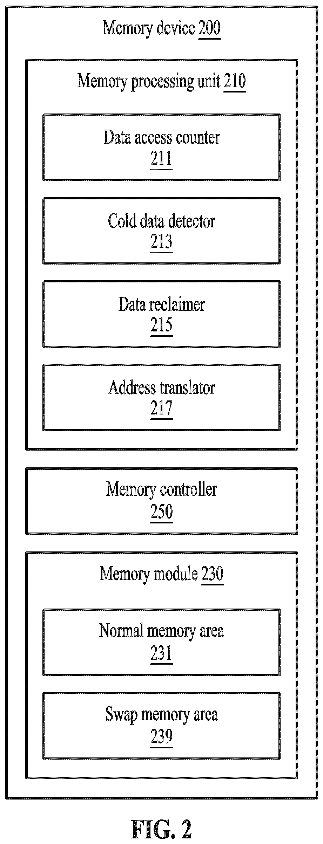

The memory module 113 may store data. The memory module 113 may include a plurality of memory blocks forming a memory area. The memory area may be an area in which data is stored therein, and may represent an area (e.g., a physical area) in which reading and/or writing data is enabled in a memory chip of the physical memory device 110. The memory area may be disposed in a memory die (or a core die such as, e.g., processor core 151) of the memory device 110. As described below with reference to FIG. 2, the memory area of the memory module 113 may be divided into a normal memory area and a swap memory area. The swap memory area may be configured to store swapped-out data. The plurality of memory blocks may be generated by using a portion or all of the memory chips of the memory device 110. Each memory block may correspond to a memory bank, and the plurality of memory blocks may be grouped by memory rank and/or memory channel. For example, a memory rank may be a set of memory chips (e.g., dynamic random-access memory (DRAM) chips) connected to the same chip select, and thus, may be accessible simultaneously. A memory channel may be a set of memory chips accessible via the same channel (e.g., memory channel).

According to an embodiment, the memory processing unit 111 may access an adjacent memory (e.g., a memory block) and may perform an operation (e.g., a processing near memory (PNM) operation or a processing in memory (PIM) operation) using a value recorded in the accessed memory block. The memory processing unit 111 may be a near memory processing unit or an in-memory processing unit. Herein, an example of the memory processing unit 111 being a PNM unit is mainly described. However, embodiments are not limited thereto. For example, unless otherwise described, the description may also apply to a PIM unit. The memory processing unit 111 may also be referred to as an accelerator. The memory processing unit 111 may be a set (e.g., a logic circuit) of logic elements manufactured and/or implemented to include logic for a designated operation. The memory processing unit 111 may be disposed with a layer (e.g., a memory layer) close to the host 150. A peripheral device including the memory processing unit 111 may also be referred to as a PNM device. The memory device 110 having a PNM unit may also be referred to as a PNM memory device. The PNM memory device may include, for example, an acceleration dual in-line memory module (AXDIMM), a compute eXpress link-AXDIMM (CXL-AXDIMM), and a CXL-disaggregated memory pool (MDP). The memory processing unit 111 may be configured to provide the host 150 with physical address information corresponding to an additional memory area determined based on a size of the swapped-out data stored in the swap memory area and the normal memory area. The physical address information may be a physical address corresponding to a range increased from a default size of the memory module 113 by a difference between an original size of the swapped-out data and the size of the swap memory area.

The memory device 110, or an auxiliary device 120 (e.g., an auxiliary memory device), may process an offloaded operation (e.g., a swap-out operation and a swap-in operation) through the memory processing unit 111. The memory system 100a or 100b, which supports offloading, may have a hardware structure that minimizes or reduces communication involved in offloading. Since the operation to be performed by the host 150 is partially distributed to a peripheral device, the host 150 may process more tasks more efficiently. Thus, the performance of the host 150 may be increased.

According to an embodiment, an operation offloaded to the memory device 110 may be a memory swap operation (or a swap operation). For example, while the host processor directs all operations, the memory device 110 may perform an operation (e.g., a swap operation as a PNM operation) that utilizes separate acceleration from the host. For example, the memory device 110 may asynchronously and autonomously perform a swap operation without a swap request by an operating system executed by the host 150. When a normal memory area of the memory module 113 is insufficient in the memory system 100a or 100b, the memory device 110 may move data of a memory area that is already allocated to an application program to another area (e.g., a swap memory area, an auxiliary memory area, or an auxiliary storage area in the memory module). Referring to FIGs. 1A and 1B, the normal memory area may be a partial area in the memory module 113 of the memory device 110. The swap memory area may be an area reserved for swap-out in the memory module 113. The auxiliary memory area may be an area in a memory module 165 of the auxiliary device 120. The auxiliary storage area may be an area in a storage 160 of the auxiliary device 120. The auxiliary storage area may be provided by the auxiliary device 120 including, for example, a non-volatile memory. For example, the data allocated to the application program may be page data in a LINUX system. A memory space of the memory module 113 may be secured by the memory swap operation described above.

The swap operation may include a swap-out operation and a swap-in operation. The memory device 110 may perform a swap-out operation and/or a swap-in operation without a request by a host. When a normal memory area in the memory module 113 is insufficient, the swap-out operation may be an operation of moving data in the normal memory area to another area. The swap-out operation may include an operation of compressing data to be moved to another area (e.g., a swap memory area). The swap-in operation may be an operation of restoring data moved to another area to the normal memory area. The swap-in operation may include an operation of decompressing data to be utilized to perform an operation (e.g., data to be used by the host 150). In the swap operation, the memory space usage may decrease since the size of data swapped out to the swap memory area decreases.

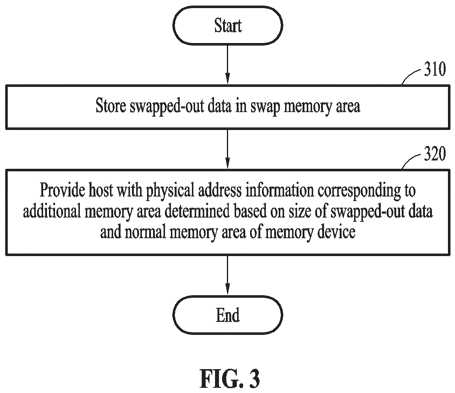

The memory processing unit 111 in an embodiment may perform an operation and/or computation involved in the memory swap (e.g., the swap-out and swap-in operations) described above. The memory processing unit 111 may process the compression, decompression, and transfer of data (e.g., page data) in response to the swap operation. The memory module 113 may store page data allocated to execute an application program in an operating system. The memory processing unit 111 may include a set (e.g., a logic circuit) of logic elements implementing at least one of, for example, a decoding logic, a decompress logic, an encoding logic, or a compress logic. The logic circuit included in the memory processing unit 111 may be integrated and implemented in a buffer unit (e.g., a buffer chip) of the memory device 110. Accordingly, the resource consumption of the host 150 for a swap-in operation and a swap-out operation may decrease. The memory system 100a or 100b may increase system performance and utilization of the host 150 by performing the swap operation without intervention from the host 150. For convenience of explanation, an example in which the memory processing unit 111 is installed in the memory device 110 is primarily described herein. However, embodiments of the present disclosure are not limited thereto. For example, according to embodiments, the memory processing unit 111 may be integrated and implemented in the host processor (e.g., the host 150), the memory device 110, or the auxiliary device 120. A structure of the memory processing unit 111 is described with reference to FIG. 2 and an operation of the memory processing unit 111 is described with reference to FIG. 3.

For convenience of explanation, the memory device 110 is primarily described herein as an example of a peripheral device. However, embodiments are not limited thereto. For example, unless otherwise described, the structure and/or operation described below may also apply to various types of peripheral devices including the memory module 113 and the memory processing unit 111. The memory processing unit 111 may also be implemented to be integrated into, for example, a CXL switch, the memory controller (MC) 155, and an interface unit.

In addition, although FIG. 1A illustrates only the peripheral memory device 110 connected to the host 150, embodiments of the present disclosure are not limited thereto. For example, referring to FIG. 1B, in an embodiment, the auxiliary device 120 may be connected to the memory device 110. In an embodiment, the auxiliary device 120 may be connected to the host 150. When the auxiliary device 120 includes a memory module, the auxiliary device 120 may be referred to as an auxiliary memory device. When the auxiliary device 120 includes a storage, the auxiliary device 120 may be referred to as an auxiliary storage device.

According to an embodiment, the memory device 110 may process a page reclaim operation implemented in an operating system through the memory processing unit 111 described above. Reclamation may be an operation of reducing the size of cold data (e.g., a cold page) occupied in the memory, and may include, for example, a compression operation, a page deduplication operation that reduces identical pages to a single page, and an operation of reducing a page constituted by a single value to 1 byte. The swapped-out data may be compressed and stored in a partial space of a main memory or may be stored in a swap area of the auxiliary device 120 (e.g., an auxiliary memory device). The memory device 110 may record corresponding information (e.g., a physical address of cold data from the host 150 side and a physical address of the cold data from the memory side) in an entry of data access information (e.g., a page access table).

Data of an application program executed in an arbitrary operating system may be stored in a memory (e.g., the main memory) in a predetermined unit. For example, in LINUX, the data of an application program may be stored as a page unit (e.g., 4 kilobytes (KB)) in the main memory. The main memory may be, for example, a memory closest to the host 150 in a memory hierarchy. When a free memory space is insufficient, the memory device 110 may secure the free memory space to respond to a memory allocation request by an application program. A compressed memory method may be used to secure the free memory space. The compressed memory method may be a method of compressing a portion of an allocated page and storing the compressed page in a main memory or a partial space (e.g., zpool) of another memory.

According to an embodiment, the free memory space may be rapidly secured because data communication between the host 150 and memory device 110 decreases. The memory device 110 may manage a memory area to be allocated to an application program that utilizes a large memory. In addition, the memory device 110 may be applied to various computing systems, such as, for example, a mobile device and a server. The memory device 110 may reduce a page reclamation latency by processing page reclamation using the memory processing unit 111 near the memory module 113 that stores the page. Accordingly, the memory device 110 may increase the system performance by rapidly responding to the page reclamation request by the host 150 and/or eliminating the need for the host 150 to request page reclamation.

The memory device 110 in an embodiment may autonomously perform the swap operation in the internal memory module 113 without the need to move data (e.g., page data) to the auxiliary memory device. The memory device 110 may perform a rapid swap operation through an internal memory bandwidth that is relatively large compared to an external system bus. Since the data to be swapped is compressed, the memory space may be additionally secured.

FIG. 2 illustrates a memory device according to an embodiment.

A memory device 200 in an embodiment may include a memory processing unit 210, a memory module 230, and a memory controller 250.

The memory module 230 may include a normal memory area 231 and a swap memory area 239. The normal memory area 231 may store, for example, non-compressed data. The swap memory area 239 may be an area reserved to store swapped-out data from the normal memory area 231. The swapped-out data may be reclaimed data, and for example, may be reclaimed page data. Due to reclamation (e.g., compression), the size of the swapped-out data may be reduced from the original size. The memory module 230 may store page data allocated to execute an application program in an operating system. Although an example in which data that is swapped out and/or swapped in by the memory processing unit 210 is page data is primarily described herein, embodiments of the present disclosure are not limited thereto.

The memory controller 250 may control the memory module 230 based on a memory access request. For example, the memory controller 250 may transfer an address value requested to be read by the memory processing unit 210 to the memory processing unit 210, or may transfer a value requested to be written for an arbitrary address to the memory module 230.

The memory processing unit 210 may provide the host with physical address information corresponding to an additional memory area that is determined based on the size of the swapped-out data and the normal memory area 231. The address of the additional memory area may correspond to the swap memory area 239 of the memory module 230, and the size of the additional memory area may be greater than the size of the swap memory area 239. The memory processing unit 210 may include a data access counter 211, a cold data detector 213, a data reclaimer 215, and an address translator 217. The data access counter 211, the cold data detector 213, the data reclaimer 215, and the address translator 217 may be logic circuits configured to perform respective operations and/or functions. However, for ease of description, the operations and/or functions of the memory processing unit 210 are divided into the data access counter 211, the cold data detector 213, the data reclaimer 215, and the address translator 217 in the description. However, embodiments of the present disclosure are not limited thereto, and some or all of the modules may be integrated.

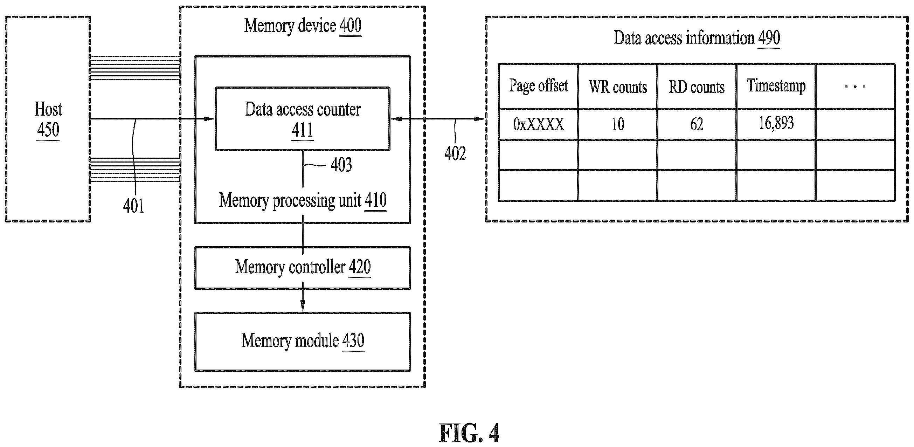

The data access counter 211 may measure and record data access information. The data access information may represent information about an access to a data-wise address in the memory module 230. For example, the data access information may include an address-wise access count and an access time as a page unit. The data access information managed by a page may be also referred to as data access information. The access count with respect to an arbitrary address (or a page) may be separately recorded as an access count for writing and an access count for reading. However, embodiments of the present disclosure are not limited thereto. For example, according to embodiments, the access count may be recorded regardless of an access type with respect to the corresponding address (or the page). The access time may be a timestamp indicating the time of accessing the corresponding address (or the page). The data access count is described in further detail below with reference to FIG. 4 below.

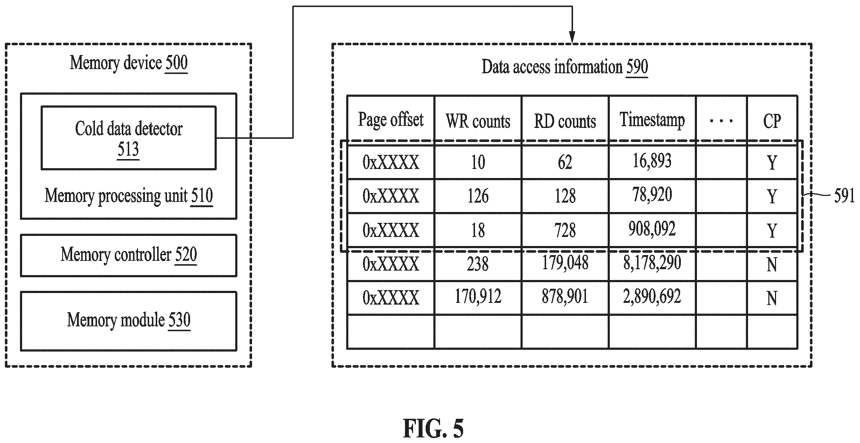

The cold data detector 213 may detect cold data (e.g., a cold page) among a plurality of pieces of data (e.g., page data). The cold data may be data that is less likely to be accessed by the host among data stored in the memory module 230. For example, the cold data may be the least frequently accessed data or the oldest accessed data among the plurality of pieces of data. In an embodiment, the cold data may be the least frequently accessed data over a specified period of time, or the oldest accessed data over a specified period of time. The cold data detector 213 may detect cold data from data stored in the memory module 230 based on at least one of an access count or an access time of data recorded in the normal memory area. The cold data detector 213 may determine data having at least one of an access count that is lower than access counts of other pieces of data recorded in the normal memory area, or an access time preceding access times of other pieces of data recorded in the normal memory area, to be the cold data. The cold data detector 213 may detect a cold page based on at least one of the access count of each page data or the access time. For reference, the access count may be a measure for indicating access frequency. The detection of the cold page is described in further detail below with reference to FIG. 5.

The data reclaimer 215 may secure a free memory space by reclaiming the cold data. For example, the data reclaimer 215 may increase the free memory space by compressing the cold page and moving the compressed page to a partial space (e.g., the swap memory area 239) of the memory module 230.

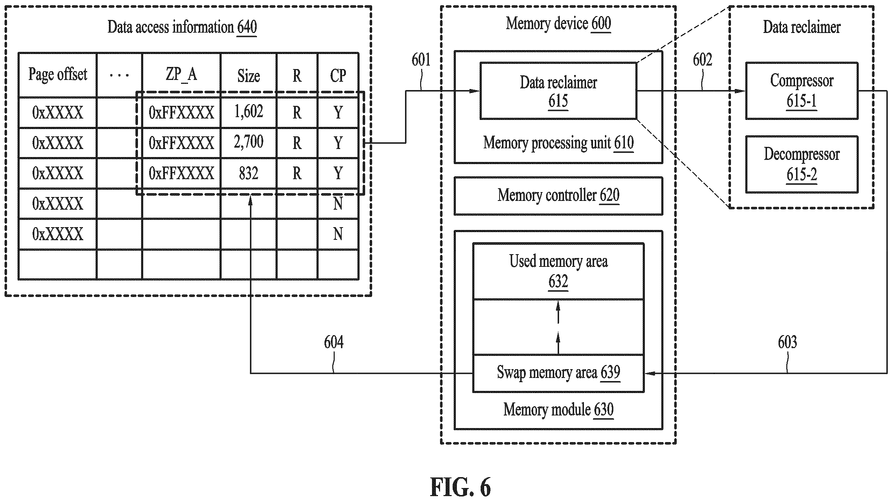

The address translator 217 may convert a physical memory address (e.g., a physical address) requested by the host into an internal physical memory address of the memory device 200. As described below, the physical address shown to the operating system of the host may be partially different from the internal physical address of the memory device 200. Herein, the physical address of the memory device 200 shown to the host and/or information including a range of the physical address may be referred to as physical address information. The physical address information is described in further detail below with reference to FIG. 4. An update of mapping information used by the address translator 217 is described in further detail below with reference to FIG. 6. For reference, herein, the physical address shown to the host may be referred to as a host physical address (HPA), and the internal physical address of the memory device may be referred to as a device physical address (DPA).

The memory processing unit 210 in an embodiment may store, in a second address in the memory module 230, compressed data from cold data of a first address in the memory module 230 by using the address translator 217. The first address may be an address value indicating a memory location in an address range corresponding to the normal memory area 231, and the second address may be an address value indicating a memory location in an address range corresponding to the swap memory area 239. The address translator 217 may update the mapping information of the data access information by mapping the first address of the physical address information from the host side with the second address of the physical address from the memory side. The address translator 217 may process a memory access request by the host based on the updated mapping information of the data access information. For example, the address translator 217 may translate the first address of the memory access request received from the host into the second address in the memory module 230. The memory device 200 may provide a value (e.g., a decompressed value from the data recorded in the second address) corresponding to the second address to the host that requests memory access (e.g., a read request) based on the first address.

FIG. 3 is a flowchart illustrating an operating method of a memory device according to an embodiment.

The memory device described with reference to FIG. 3 may be the memory device according to embodiments of the present application described herein such as, for example, the memory device described with reference to FIGs. 1A-1B, 2, and 4-10.

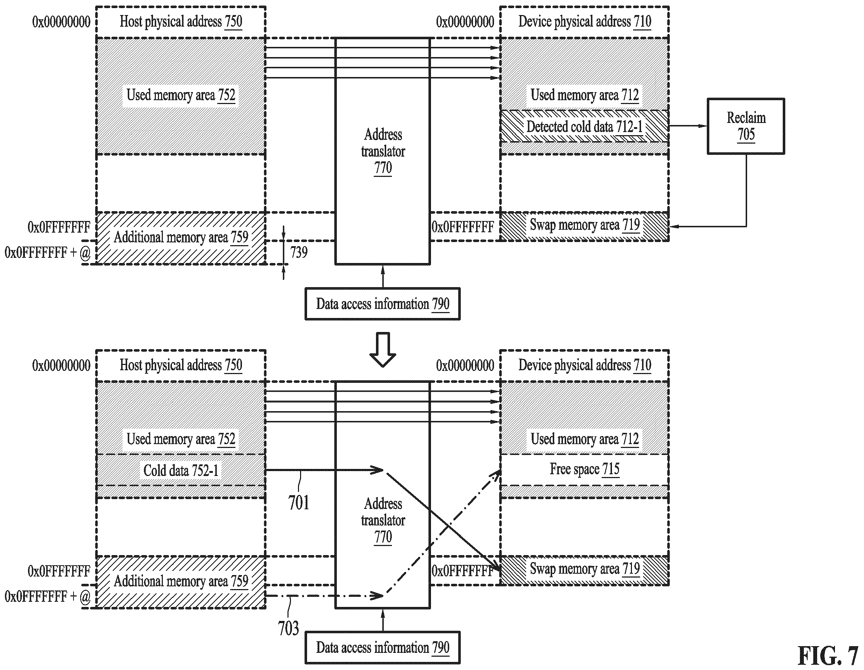

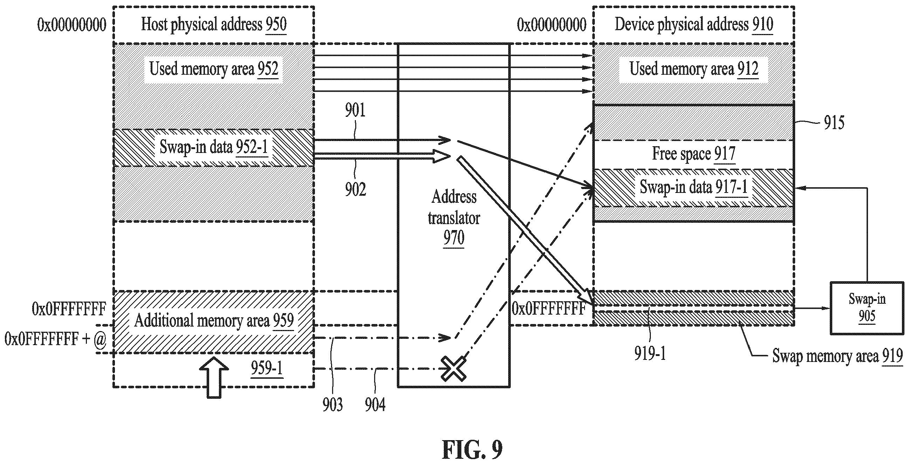

In operation 310, the memory device may store swapped-out data in a swap memory area. For example, the memory device may select cold data from data in a normal memory area. The memory device may compress the selected cold data. In addition, the memory device may encrypt the selected cold data. The memory device may store the compressed cold data (e.g., the swapped-out data) in the swap memory area. The memory processing unit may update address mapping information by mapping an original address of the cold data with an address of the compressed data in the swap memory area. The address mapping information may be included in the data access information. The memory processing unit may process a memory access request received from the host based on the address mapping information. Address mapping and processing the memory access request are described in further detail below with reference to FIGs. 7 and 9.

In operation 320, the memory device may provide the host with physical address information corresponding to an additional memory area determined based on the size of swapped-out data and the normal memory area of the memory device. For example, the memory device may provide the host with physical address information in an address range corresponding to the memory size that is greater than a default size. The default size may represent a maximum physical memory size provided by the memory module of the memory device.

The additional memory area may represent an additional area shown as a physical memory area to the host. Since the swapped-out data has a smaller size than the original size due to compression, an available space (e.g., an empty space) in the normal memory area may increase by the compressed size. As described below, the memory device may provide the host with an additional memory area, having the size corresponding to an empty space increased by compression, in addition to the normal memory area. The memory device may provide the host with not only an address indicating the normal memory area, but also an address indicating the additional memory area as a physical address. The address indicating the additional memory area provided to the host may be different from the address indicating the normal memory area.

The host in an embodiment may manage a physical address that is accessible by an operating system based on physical address information. For example, the host may update a physical address provided by the memory device in a system memory pool of the operating system by performing a hot-plugin operation based on the physical address information. The physical address of the system memory pool may be a host physical memory address (e.g., an HPA) recognized by the host with respect to the memory device. The host physical memory address may be possessed by the memory module of the memory device connected to the host, and may be an address recognized by the host and/or the operating system of the host. Based on the physical address information, the host may recognize and manage a physical address to be used when sending a request to the memory device for access. As described above, the physical address information may include a physical address of the memory device and/or a range of the physical address provided to the host from the memory device. The host may manage and/or update the host physical memory address (e.g., the HPA) of the system memory pool with the physical address information. Accordingly, the host may synchronize the physical address accessible by the operating system with a physical address indicated by the physical address information provided by the memory device. For reference, the host physical memory address and the physical address information described above may be a logic memory address from the perspective of the memory device, but may be recognized as a physical memory address from the perspective of the host.

FIG. 4 illustrates an example of monitoring memory access according to an embodiment.

Referring to FIG. 4, a memory device 400 may include a memory processing unit 410, a memory controller 420, and a memory module 430. The memory processing unit 410 may include a data access counter 411.

The memory processing unit 410 in an embodiment may update data access information 490 based on a memory access request received from a host 450.

In operation 401, the host 450 may request memory access based on an arbitrary physical address (e.g., an HPA) by sending a memory access request to the memory device 400. The memory access request may be a read request and/or a write request for a corresponding physical address, and may include a physical memory address (e.g., a physical address) to be accessed. The host 450 may generate the memory access request including a physical address determined based on physical address information (or a system memory pool). The host 450 may transfer the generated memory access request to the memory device 400. As described below, the physical address information shown to the host 450 may be partially different from a physical address possessed by the memory device 400 therein.

In operation 402, in response to the memory access request received from the host 450, the memory processing unit 410 (e.g., the data access counter 411 of the memory processing unit 410) may update an access count of a page (e.g., page data) corresponding to the memory access request. The data access counter 411 may check whether the data access information 490 (e.g., a page access table) includes a page including the corresponding physical address. In the example shown in FIG. 4, each entry of the page access table may include, for example, a page offset, a write count, a read count, and a timestamp. The page offset may indicate a value that identifies a physical address as a page unit. The page offset may include some bits of a bit sequence constituting a requested address value. For example, a hexadecimal representation of an arbitrary address constituted by a 64-bit bit sequence may be "OxXXXX...XX". The page offset may be some bits (e.g., upper bits) and may be, for example, "OxXXXX". The page offset may be determined by, for example, the page unit (e.g., 4 KB), the number of pages, and the number of frames. In the data access information 490, the entry shown in FIG. 4 may have a write (WR) count of 10, a read (RD) count of 62, and a timestamp of 16,893.

When the data access counter 411 finds an entry corresponding to the physical address of the memory access request from the data access information 490, the data access counter 411 may determine the type of the memory access request. For example, the data access counter 411 may determine whether the memory access request is of a read type or a write type. For example, the data access counter 411 may retrieve an entry corresponding to the page offset that matches the physical address of the memory access request from the data access information 490. The data access counter 411 may increase an access count value in the retrieved entry for the physical address and may update the increased access count value. The data access counter 411 may record a timestamp at the time of updating the access count with respect to the physical address of the data access information 490. The timestamp may be determined using a time stamp counter (TSC) value in the memory device 400.

When the data access information 490 does not include a requested address (e.g., a physical address), the data access counter 411 may allocate a new entry from the data access information 490. The data access counter 411 may record a page offset corresponding to the requested address in the new entry. The data access counter 411 may update an access count (e.g., a read count or a write count) value and a timestamp value in the new entry.

In operation 403, the memory device 400 may process the memory access request after updating the access count. For example, the memory device 400 may attempt a normal memory access of the memory module 430 by transferring the memory access request described above to the memory controller 420. The memory device 400 may read a value indicated by the physical address (e.g., the HPA) from the host side included in the memory access request or may write a value in a corresponding portion.

FIG. 5 illustrates an example of detecting cold data according to an embodiment.

Referring to FIG. 5, a memory device 500 may include a memory processing unit 510, a memory controller 520, and a memory module 530. The memory processing unit 510 may include a cold data detector 513.

The memory processing unit 510 (e.g., the cold data detector 513 of the memory processing unit 510) in an embodiment may detect cold data 591 from data stored in the memory module 530 based on at least one of an access count or an access time among data recorded in a normal memory area. The cold data detector 513 may detect the cold data 591 based on the access information of each entry recorded in data access information 590. The access information may include an access count and an access time. For example, the memory processing unit 510 may determine data having at least one of an access count that is less than an access count of other pieces of data in data recorded in the normal memory area, or an access time that precedes an access time of other pieces of data, to be the cold data 591.

For example, the cold data detector 513 may determine page data having the lowest access count to be a cold page. The page data with the least access count may be least frequently used (LFU) page data. In the page data recorded in the data access information 590, the cold data detector 513 may detect the cold page in the order of page data having the lowest access count to the page having the highest access count.

In addition, the cold data detector 513 may determine the page data having the oldest access time to be the cold page. The page data with the oldest access time may be least recently used (LRU) page data. Among pages recorded in the data access information 590, the cold data detector 513 may detect the cold page in the order of page data having the oldest access time to the latest access time from the time of the detection attempt (e.g., a current time point).

However, embodiments of the present disclosure are not limited thereto. For example, according to embodiments, the cold data detector 513 may sort and detect the cold page by using both the access count and the access time. For example, the cold data detector 513 may primarily select and/or sort page data from the oldest access time to the latest, and among the primarily selected and/or sorted pages, the cold data detector 513 may secondarily select and/or sort page data from page data having the lowest access count to page data having the highest access count. In addition, the cold data detector 513 may detect the cold page using various metrics calculated based on at least one of the access count and the access time described above. The cold data detector 513 may calculate a metric used to indicate or determine the order and/or priority of pages to be swapped out. When determining the cold page only based on the access time, a page that is accessed at a relatively long cycle with a high access count may be classified as a cold page. Because it may be rather inefficient to swap out the corresponding page as the cold page, the memory device 500 may also consider the access time as well as the access count.

Among the pages sorted based on the various metrics described above, the cold data detector 513 may determine a predetermined number of pages and/or a page corresponding to a predetermined memory size to be the cold page. The cold data detector 513 may set a cold page bit value (e.g., "1") in the data access information 590 to the page detected as the cold page.

The memory processing unit 510 may record a value indicating that an entry determined to be the cold page is a cold page among entries of the data access information 590. For example, the cold data detector 513 may write a value (e.g., "1") indicating Y in a cold page (CP) field. In the cold page (CP) field, Y indicates "YES" and N indicates "NO."

FIG. 6 illustrates an example of a swap-out operation according to an embodiment.

Referring to FIG. 6, a memory device 600 may include a memory processing unit 610, a memory controller 620, and a memory module 630. The memory processing unit 610 may include a data reclaimer 615.

In operation 601, the memory processing unit 610 (e.g., the data reclaimer 615 of the memory processing unit 610) of the memory device 600 may identify data classified as cold data. The data reclaimer 615 (or a page reclaimer) may check an entry in data access information 640 to which a bit value (e.g., "1" indicating Y) indicates that the data is a CP in the data access information. In a cold page (CP) field in the data access information 640, Y indicates "YES" and N indicates "NO."

In operation 602, the data reclaimer 615 may perform a swap-out operation on the cold data. The data reclaimer 615 may include a compressor 615-1 and a decompressor 615-2 in the example shown in FIG. 6. The data reclaimer 615 may transmit, to the compressor 615-1, a physical address (e.g., an internal physical address from the memory side) of page data corresponding to an entry to which the CP (e.g., a cold page) is set in the data access information. The compressor 615-1 may compress the corresponding page data.

In operation 603, the memory processing unit 610 may move compressed data to a swap memory area 639 (e.g., a zpool area). The memory processing unit 610 may reset a value of a memory location corresponding to the original data in the normal memory area to "0" since the compressed data is preserved in the swap memory area 639.

In operation 604, the memory processing unit 610 may update the data access information based on swap-out. The memory processing unit 610 may record an address indicating a memory location storing the compressed data in the swap memory area 639 in a ZP_A field of the corresponding entry in the data access information and may record a compressed size in a size field. The memory processing unit 610 may set a bit value of a reclaimed (R) field of the corresponding entry in the data access information to be a value (e.g., "1") indicating Y.

According to an embodiment, the memory processing unit 610 may perform detection and swap-out operations on cold data periodically or depending on a free memory space without a swap-out request by the host. For example, in an embodiment, the data reclaimer 615 may perform a swap-out operation based on operations 601 to 604 described above in response to a ratio of a used memory area 632 in the normal memory area to a remaining free memory space reaching a threshold ratio. For example, in an embodiment, the data reclaimer 615 may perform a swap-out operation at a predetermined cycle.

Since the size of the cold data is reduced by the swap-out operation, the used memory area 632 may decrease in the normal memory area in the memory module 630. The swap memory area 639 may increase because the compressed data is generated. Since an unused space (or a free space) increases as the used memory area 632 decreases, the size of an available additional memory area from the host side may increase. The size of the additional memory area may depend on a decreased size of the used memory area 632 due to the compression of cold data. Accordingly, the size of the additional memory area may vary depending on a compression rate of the swapped-out data.

FIG. 7 illustrates an example of changing address mapping due to a swap-out operation according to an embodiment.

According to an embodiment, a partial mismatch may occur between a physical address (e.g., an HPA 750) recognized by a host and an internal physical address (e.g., a DPA 710) of a memory device, due to a swap operation. As described above, this is because, in a used memory area 752 from the host side, it may be recognized that cold data 752-1 still exists in a first address however, the first address is a free space 715 in a used memory area 712 from the memory side. FIG. 7 illustrates mapping a memory area (e.g., the free space 715) secured through data reclamation (e.g., page reclamation) with a physical memory area (e.g., an additional memory area 759) managed by an operating system.

For example, a memory processing unit may swap out data of the first address determined to be the cold data 752-1 to a second address. As described above, the first address may be an address belonging to the normal memory area from the memory side. The second address may be an address belonging to a swap memory area 719 from the memory side. The memory processing unit may detect the cold data 752-1 in the used memory area 752 as described with reference to FIGs. 4 to 6. The memory processing unit may perform a reclamation operation 705 on detected cold data 712-1. The memory processing unit may store the compressed data in the swap memory area 719 by way of the reclamation operation 705. The cold pages may be compressed and may be stored in the swap memory area 719 corresponding to a last address of physical memory addresses of the memory device. The memory processing unit (e.g., an address translator 770) may update mapping information in data access information 790 by mapping the first address from the host side onto the second address from the memory side. Although the mapping information is updated in the memory device, the memory location of the cold data 752-1 in physical address information provided to the outside of the memory device may still be the first address. The host may recognize that the cold data 752-1 is still located at the first address.

The memory processing unit in an embodiment may update the mapping information in the data access information 790 by mapping the third address from the host side onto the first address from the memory side. By way of the swap operation described above, a memory location of which the internal physical address of the memory device is the first address may be a free space 715. The memory processing unit may determine the additional memory area 759 based on the free space 715 triggered by the swap-out operation. The memory processing unit may generate and/or increase the additional memory area 759 by the size of the swapped-out data (e.g., an uncompressed size). For example, the address translator 770 may map a physical address (e.g., a physical address from the host side) belonging to the additional memory area 759 onto a physical address (e.g., a physical address from the memory side) belonging to the normal memory area of the memory module.

According to an embodiment, the physical address information (or an HPA) provided to the host side may include an address range corresponding to the normal memory area and an address range corresponding to the additional memory area 759. The physical address belonging to the additional memory area 759 may belong to an address range that is different from the address range corresponding to the normal memory area of the memory module. The address range corresponding to the normal memory area and the address range corresponding to the additional memory area 759 may be consecutive. For example, the additional memory area 759 may include an address corresponding to the swap memory area 719 of the memory module. The address translator 770 may allocate the address range corresponding to the swap memory area 719 to the additional memory area 759 in the physical address information provided to the host side, thereby, the address of the normal memory area and the address of the additional memory area 759 may be consecutive. In the example of FIG. 7, the normal memory area of the memory module may correspond to an address range from "0x00000000" to "0x0FFFFFFE". The swap memory area 719 of the memory module may correspond to an address range of "0x0FFFFFFF". The additional memory area 759 may correspond to an address range from "0x0FFFFFFF" to "0x0FFFFFFF+a" (e.g., "0x1XXXXXXX"). A cold page reclaimed by the memory device may be sparsely distributed. However, the memory device may map memory locations of the cold page from the mapping information (e.g., a mapping table) in the data access information 790 to a consecutive memory area from the perspective of the operating system.

In addition, the physical address information may include a physical address of a range corresponding to a size 739 increased by a difference between an original size of swapped-out data and a size of the swap memory area 719, rather than a default size of the memory module. For reference, the additional memory area 759 may be larger than the swap memory area 719. This is because the size of the additional memory area 759 is determined based on the uncompressed size of the swapped-out data, but the size of the swap memory area 719 is determined based on the compressed size of the swapped-out data. Accordingly, the memory device may provide the host with the physical address information corresponding to the increased memory size from the default size as the consecutive address range. Since the swap operation and mapping update are performed in the memory device, the host may use the memory device with the added memory size without an additional operation. The host may update a system memory pool with physical memory information provided by the memory device using a feature (e.g., a memory hotplug feature) supported by the operating system. Accordingly, a free memory space secured by page compression may be dynamically added to the physical memory area of the operating system. The memory processing unit may update the size of the secured free memory space (e.g., the additional memory area 759) to a register of the memory device. The physical memory information provided to the operating system described above may include not only the address ranges of the normal memory area and the additional memory area 759, but also the default size, the secured memory size, and the total physical memory size.

The memory processing unit in an embodiment may process a memory access request by the host using the data access information 790 having the updated mapping information. For example, the memory processing unit may translate a physical address (e.g., a physical address from the host side) included in the memory access request received from the host into a physical address in the memory module using the address translator 770. The mapping information of the data access information 790 may include mapping between a physical address (e.g., the HPA 750) managed by the host and an internal physical address (e.g., the DPA 710) of the memory side. The address translator 770 may translate the HPA 750 into the DPA 710 using the mapping information.

For example, when the memory processing unit receives an access request 701 to the first address from the host, the memory processing unit may provide the host with access to the second address. As described above, the host may recognize that the cold data 752-1 is still located at the first address. When the access request 701 to the first address is a read request, the memory processing unit may transmit a value recorded in the second address of the memory module to the host. When the access request 701 to the first address is a write request of an arbitrary value, the memory processing unit may write a value corresponding to the second address of the memory module. An operation of processing access to the second address belonging to the swap memory area 719 may accompany decompression. The access processing operation that accompanies decompression is described in further detail below with reference to FIG. 9.

When the memory processing unit receives an access request 703 to the third address from the host, the memory processing unit may provide the host with access to the first address. When the access request 703 to the third address is a read request, the memory processing unit may transmit a value recorded in the first address of the memory module to the host. When the access request 703 to the third address is a write request of an arbitrary value, the memory processing unit may write a value corresponding to the first address of the memory module.

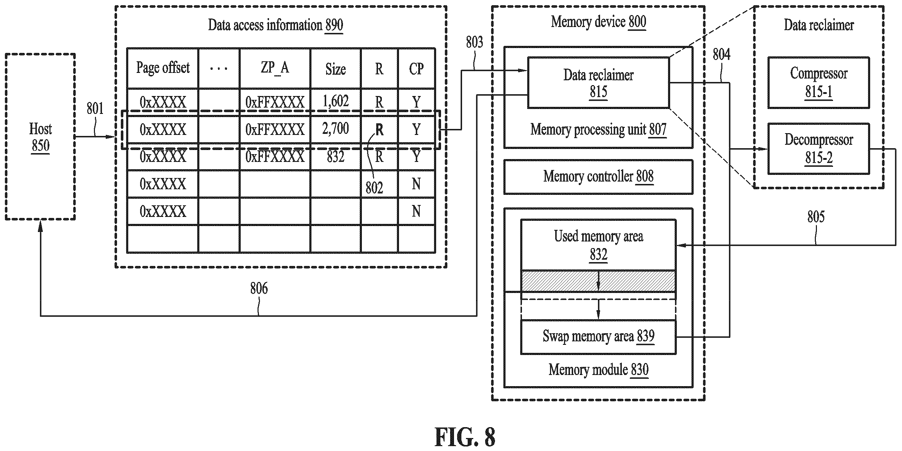

FIG. 8 illustrates an example of a swap-in operation according to an embodiment.

In operation 801, a memory device 800, which includes a memory processing unit 807, a memory controller 808, and a memory module 830, may receive a memory access request from a host 850. The memory access request may be a read and/or write request to an arbitrary physical address.

In operation 802, a memory processing unit 807 may check whether a memory access request received from data access information 890 indicates cold data. For example, the memory processing unit 807 may retrieve an entry having a page offset corresponding to a physical address of the memory access request. The memory processing unit 807 may check whether a bit value of a reclaimed (R) field is set to a value indicating Y in the retrieved entry. In the data access information 890, Y indicates "YES" and N indicates "NO."

In operation 803, the memory processing unit 807 may provide compression information to a data reclaimer 815. When the retrieved entry is reclaimed, the memory processing unit 807 may read an address (e.g., an address value of a ZP_A field) indicating a memory location of corresponding cold data in swap memory area 839 and a compressed size (e.g., a value of a size field). The memory processing unit 807 may provide the data reclaimer 815 with read compression information (e.g., a memory location in which the compressed data is stored and a compressed size). The data reclaimer 815 may include a compressor 815-1 and a decompressor 815-2.

In operation 804, the decompressor 815-2 may decompress the compressed data. For example, the decompressor 815-2 may load data indicated by the compression information and may decompress the loaded data.

In operation 805, the decompressor 815-2 may move the decompressed data. For example, the decompressor 815-2 may store the decompressed data in a new address in the normal memory area.

In operation 806, the memory processing unit may return decompressed page data to the host 850.

According to an embodiment, a used memory area 832 may increase and the swap memory area 839 may decrease in the memory module 830 by way of the swap-in operation described above. However, the swap-in operation is not limited to the operation described with reference to FIG. 8, and an additional operation which may be performed is described below with reference to FIG. 9.

FIG. 9 illustrates an example of changing address mapping due to a swap-in operation according to an embodiment.

When the size of data of a second address is reduced, a memory processing unit in an embodiment may temporarily store restored data from the reduced data in a buffer. After the memory processing unit transmits the data temporarily stored in the buffer to the host, the memory processing unit may delete the data. The memory processing unit may maintain cold data in a compressed state in the swap memory area. Since the decompressed data is not maintained and is deleted, the sizes of a used memory area 912 and a swap memory area 919 may not change. However, exemplary embodiments of the present disclosure are not limited thereto. For example, according to embodiments, the memory processing unit may process decompressed data differently depending on an access count with respect to cold data.

For example, when an access count with respect to cold data is small, the memory processing unit may only temporarily decompress the corresponding data. In response to the access count with respect to the second address data being less than a threshold, the memory processing unit may temporarily store decompressed data in at least one of a buffer, a memory, or a storage and may delete the decompressed data, as described above.

In an example, when an access count with respect to cold data (e.g., swap-in data 952-1 and 917-1) is high, the memory processing unit may perform a swap-in operation 905. In response to the access count with respect to data of the second address exceeding the threshold, the memory processing unit may store data restored from reduced data of the second address in a fourth address in the normal memory area. The memory processing unit may determine an address indicating an empty slot belonging to a free space 917 to be the fourth address. The free space 917 may include a plurality of empty slots in the unit of a page and the memory processing unit may select one from the plurality of empty slots. The empty slot may be an unused area between used memories in the normal memory area and may be an area in the unit of a page. The memory processing unit may provide the host with the restored data stored in the fourth address. Accordingly, the memory processing unit may provide the host with access to the swap-in data 917-1 located at the fourth address in response to a memory access request 901 based on the first address.

Referring to FIG. 9, the size of an additional memory area 959 may decrease due to a change in mapping between the HPA 950 and the DPA 910. A portion 959-1 corresponding to the swap-in data 952-1 in the additional memory area 959 may be removed. An address translator 970 may preserve, in the data access information, mapping 903 between a maintained portion of the additional memory area 959 and a corresponding portion 915 in the used memory area 912. The address translator 970 may delete mapping 904 between the removed portion 959-1 from the additional memory area 959 and the swap-in data 917-1 from the data access information. The address translator 970 may change mapping 902 between a physical address where the swap-in data 952-1 is located in the used memory area 952 from the host side and a physical address where compressed data 919-1 is located in the swap memory area 919. The address translator 970 may map the first address corresponding to the swap-in data 952-1 and the fourth address corresponding to the swap-in data 917-1.

Although FIGs. 2 to 9 mainly describe an example in which the memory device internally performs a memory swap operation, embodiments of the present disclosure are not limited thereto. For example, according to embodiments, the memory processing unit of the memory device may swap out cold data to an external device as well as a memory module in the memory device. For example, the memory processing unit may transfer the swap-out data to an external device having at least one of a memory or a storage. The external device may be, for example, the auxiliary device 120 of FIG. 1B. The memory processing unit may manage mapping information between a physical address (e.g., a physical address of the auxiliary device 120) of the swapped-out data and a physical address provided to the host side.

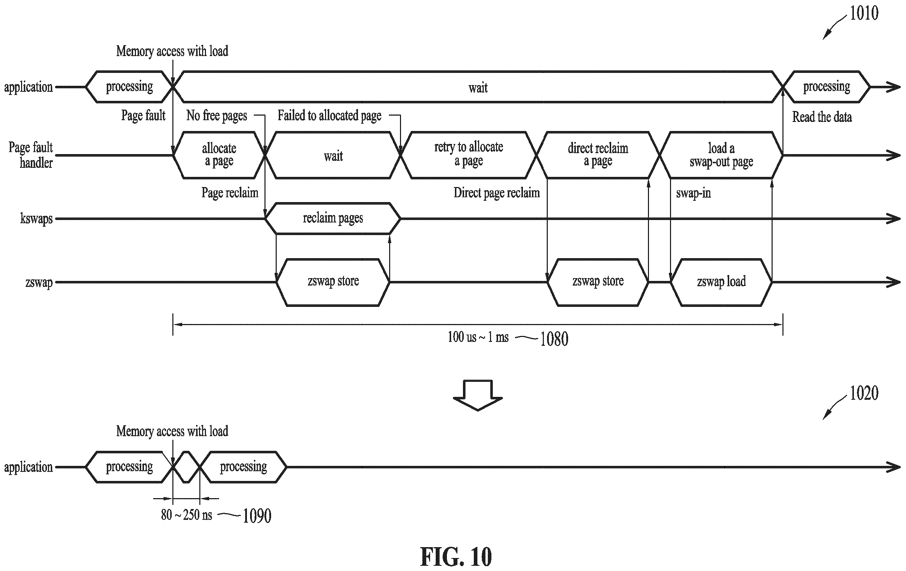

FIG. 10 illustrates an example of improved memory access in a memory device and/or a memory system according to an embodiment.

The memory device in an embodiment may secure a free memory space by asynchronously and/or periodically performing a swap operation (e.g., page reclaim) without intervention of an operating system of a host. The operating system of the host may perform memory allocation requested by an application program without the need to perform or request the swap operation. For example, the memory device may decompress and store a compressed page in a new page without executing a page fault handler 1010 of the operating system, thereby allowing the application program to access the new page. The memory device in an embodiment may not need to call the page fault handler 1010 because the memory device asynchronously performs the swap-out operation with the host described above. The page fault handler 1010 may utilize a time 1080 between about 100 µs and about 1 ms. The page reclamation operation may be implemented in hardware in the memory device and may seamlessly perform memory swap invisibly to the host. The host may only perform a normal memory access 1020. Accordingly, the performance of a memory system and memory access latency may be significantly improved to between about 80 ns and about 250 ns. In addition, when the host makes a request for swapped-out data, the memory device may perform a swap-in operation by itself using the memory processing unit. The memory device may efficiently process memory access and computational operations utilized for page reclamation in a dedicated accelerator (e.g., the memory processing unit) disposed in or adjacent to the memory.

Since the memory device performs page reclamation described above asynchronously and independently of the host, the performance degradation of a computing system due to a communication bottleneck between the host and the memory device may decrease and/or may be minimized. The memory device may efficiently secure a free memory space by compressing cold pages that are less frequently accessed. The memory device may rapidly access compressed pages without passing through the page fault handler 1010 of the operating system and may provide a value of a compressed page to the host.

Since the operation described above is performed inside the memory device, external bus traffic between the host and the memory device may decrease. The memory device may rapidly process compression and/or decompression operations of cold data using an internal bandwidth. In addition, interference with an operation of an application program executed by the host may decrease and/or may be minimized.

The units described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

As is traditional in the field of the present disclosure, embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, etc., which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions.

The above-described devices may be configured to act as one or more software modules in order to perform the operations of the above-described examples, or vice versa.

As described above, although the examples have been described with reference to the drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components.

Accordingly, while the present disclosure has been particularly shown and described with reference to embodiments thereof, it will be understood by those of ordinary skill in the art that various changes in form and detail may be made therein without departing from the scope of the present disclosure as defined by the following claims.

## Claims

1. A memory device, comprising:
a memory module comprising a normal memory area and a swap memory area,
wherein the swap memory area is configured to store swapped-out data; and
a memory processing unit configured to provide a host with physical address information corresponding to an additional memory area determined based on a size of the swapped-out data and the normal memory area.

2. The memory device of claim 1, wherein the physical address information is a physical address corresponding to a range increased from a default size of the memory module by a difference between an original size of the swapped-out data and a size of the swap memory area.

3. The memory device of claim 1 or 2, wherein an address of the additional memory corresponds to the swap memory area of the memory module, and a size of the additional memory area is greater than a size of the swap memory area.

4. The memory device of one of claims 1 to 3, wherein the memory module is configured to store page data allocated to execute an application program in an operating system.

5. The memory device of one of claims 1 to 4, wherein the memory processing unit is configured to:
detect cold data from data stored in the memory module based on at least one of an access count or an access time of data recorded in the normal memory area, and
determine data having at least one of an access count that is lower than access counts of other pieces of data recorded in the normal memory area, or an access time preceding access times of other pieces of data in the normal memory area, to be the cold data.

6. The memory device of one of claims 1 to 5, wherein the memory processing unit is further configured to:
in response to a memory access request received from the host, update an access count of a page corresponding to the memory access request, and
process the memory access request after updating the access count.

7. The memory device of one of claims 1 to 6, wherein the memory processing unit is further configured to:
swap out data of a first address determined to correspond to the cold data to a second address, and
update mapping information in data access information by mapping the first address from a host side onto the second address.

8. The memory device of claim 7, wherein the memory processing unit is further configured to, when receiving an access request to the first address from the host, provide the host with access to the second address.

9. The memory device of claim 8, wherein the memory processing unit is further configured to:
when a size of data of the second address is reduced, temporarily store data restored from reduced data in a buffer, and after transmitting the data temporarily stored in the buffer to the host, delete the data from the buffer, or
in response to an access count with respect to the data of the second address exceeding a threshold, store data restored from reduced data of the second address in a third address in the normal memory area, and provide the host with the restored data stored in the third address.

10. The memory device of claim 7, wherein the first address is an address belonging to the normal memory area of a memory side, and the second address being an address belonging to the swap memory area of the memory side, or
wherein the memory processing unit is further configured to update mapping information in data access information by mapping a third address of a host side onto the first address of the memory side, and when receiving an access request to the third address from the host, to provide the host with access to the first address.

11. The memory device of one of claims 1 to 10, wherein a size of the additional memory area varies depending on a compression rate of the swapped-out data.

12. The memory device of one of claims 1 to 11, wherein the memory processing unit is further configured to:
transmit the swapped-out data to an external device comprising at least one of a memory or a storage, and manage mapping information between a physical address of the swapped-out data and a physical address provided to a host side, or
periodically perform detection and swap-out operations on cold data without a swap-out request by the host.

13. The memory device of one of claims 1 to 12, wherein when a size of the normal memory area is insufficient, the memory device performs a swap-out operation without a request by the host, and
wherein the swap-out operation comprises compressing the swapped-out data in the normal memory area, and storing the compressed swapped-out data in the swap memory area.

14. A method of operating a memory system, the method comprising:
providing, by a memory device, a host with physical address information of an address range corresponding to a memory size that is greater than a default size; and
managing, by the host, a physical address that is accessible by an operating system based on the physical address information.

15. The method of claim 14, further comprising updating, by the host, the physical address, which is provided by the memory device, in a system memory pool of the operating system by performing a hot-plugin operation based on the physical address information.
